# EUROPEAN PATENT SPECIFICATION

(11) **EP 3 873 681 B1**
(45) Date of publication and mention of the grant of the patent: **26.10.2022**
(21) Application number: 19798360.4
(22) Date of filing: 31.10.2019
(51) Int. Cl.: B07B 13/05, B65B 57/14

(54) **SLACK SEPARATION APPARATUS AND METHOD**
FEINTEILETRENNVORRICHTUNG UND -VERFAHREN
APPAREIL ET PROCÉDÉ DE SÉPARATION DE FINES

(30) Priority: 31.10.2018 GB 201817805
(43) Date of publication of application: 08.09.2021
(73) Proprietor: Ishida Europe Limited, Birmingham, West Midlands B32 3DB (GB)
(72) Inventor: BRON, Michael, 5709 RW Helmond (NL); SCHEPENS, Ruud, 5481 EN Schijndel (NL)
(74) Representative: Gill Jennings & Every LLP
(86) International application number: PCT/GB2019/053085
(87) International publication number: WO 2020/089632

(56) References cited:
- EP-A1- 1 380 510
- EP-A1- 2 940 438
- CN-A- 105 540 282
- KR-B1- 101 238 705
- US-A- 3 046 143
- US-A1- 2011 313 566

## Description

### FIELD

The present disclosure relates to methods and apparatus for separating excess slack out from a mixture of product and slack. For example, the slack could be a food product coating.

More specifically, aspects relate to a hopper for diverting excess slack away from a mixture of product and slack, apparatus for separating excess slack from a mixture of product and slack comprising said hopper, packaging apparatus comprising said hopper and a method of diverting excess slack away from a mixture of product and slack.

### BACKGROUND

Some products are packaged together with additional material, which will be referred to herein as slack. Slack, which is generally of a substantially solid or liquid form, may be mixed with solid product before the mixture is portioned into packaging.

Such slack may be included to protect the product in some way, for example from degradation due to exposure to certain chemicals or due to motion of the product within its packaging. Alternatively or additionally, slack may be included to enhance the product in some way, for example food products may be provided with loose coatings of sugar, breadcrumbs or herbs to improve one or more of their taste, texture, appearance or smell.

In some processes, for example coating processes, it may be necessary to mix a higher ratio of slack to product than is desired in the final packaged product, for example to ensure an even coating can be achieved. This presents a problem however, of how to separate excess slack from the product before packaging.

In some processes if excess slack is separated between mixing of the product and slack and packaging of the product, the excess slack can be fed back into the production line at the point where the product and slack are mixed, providing an advantage of reducing wastage.

For some products it is not desirable for excess slack to be allowed to float freely within the packaging. For example if excess breadcrumbs are floating in the packaging of a breaded food product intended for oven cooking then that excess slack could end up burning on to the oven tray. Separation of excess slack prior to packaging helps to solve this problem.

A further problem can arise where a mixture of product and slack is dropped into packaging, which is subsequently sealed towards its upper end. If the slack falls at a slower rate than the product, for example where the product is a jelly sweet and the slack is a sugar coating, the seal quality may be compromised by slack trapped within the seal. The sealing step can be delayed to avoid this problem by allowing the slack to settle before sealing, but this would of course slow the process speed.

EP 1380510 A1 discloses a hopper and a method for selecting and feeding articles to blisters or other containers that includes feeding from a first hopper, filled with unselected articles, to a second main hopper with selected size-matching articles. The selection is performed by a tapered inlet section, inside which bigger articles get jammed and stop. The stopped articles are removed by means of a shutter hinged to each inlet section.. A sensor detects when the flow of size-matching articles is interrupted thus operating the relevant shutter.

KR 101238705 B1 discloses a hopper switchgear for grain packing, the switchgear equipped with: a grain drawing box which discharges grains to a discharge unit; a switchboard which enables the amount of grain discharged to be varied by opening and closing the discharge unit; the switchboard comprising a first switch board which opens the discharge unit for the first time and which is equipped with discharge holes to discharge small quantity of grains and a second switch board installed under the first switch board to control the amount of discharge which opens the discharge unit for the second time and which enables mass amount of grain discharge.

US 2011/0313566 A1 discloses a quantity regulating module of an automatic tablet dispenser, and a tablet dispensing method thereof, which are capable of automatically packing various-shaped tablets, and accurately, rapidly and cleanly controlling supplying of tablets without missing any. The quantity regulating module includes: a module body including an inlet through which a tablet is put, a hopper-side supply part supplying the tablet put through the inlet to a hopper of a medicine packing machine, and a recollecting part returning the tablet put through the inlet to a location from which the tablet starts to be transferred; a detecting sensor counting the number of tablets put through the inlet; and a controller comparing the number of tablets counted by the detecting sensor to a predetermined quantity, transferring the tablets to the hopper-side supply part if the counted number of tablets is equal to the predetermined quantity, and transferring the tablets to the recollecting part if the counted number of tablets exceeds the predetermined quantity.

EP 2940438 A1A describes a method of and apparatus for grading food pieces. The method comprises feeding individual food pieces in sequence to a weighing machine having a plurality of weigh hoppers, each food piece being fed to a respective weigh hopper; determining the weights of the food pieces in the hoppers; and dispensing the food pieces from the weighing machine in different manners depending upon the relationship between the weight of each food piece and at least one predetermined range of weights such that food pieces with weights falling within the predetermined range are dispensed in the same manner different from the manner in which those with weights falling outside the predetermined range are dispensed.

What is needed is an alternative method and apparatus for excess slack separation, which contributes to solving one or more of the problems discussed above and/or provides one or more of the advantages discussed above.

The problems discussed above are solved by a hopper in accordance with claim 1 or claim 4, and a method in accordance with claim 12 or claim 15.

### SUMMARY

According to a first aspect, there is provided a hopper for diverting excess slack away from a mixture of product and slack in accordance with claim 1. The hopper comprises a gate moveable between open and closed positions. The gate is configured such that, when the gate is in the open position, a first path is provided for contents of the hopper, comprising a mixture of product and slack, to exit the hopper. The gate is further configured such that, when the gate is in the closed position, the first path is closed by the gate so that product is retained in the hopper and a second path, different from the first path, is provided for slack to exit the hopper. This arrangement means that product can be separated from excess slack by opening and closing the gate as will be described in more detail below.

The first path can comprise a first aperture sized to permit egress of both product and slack, for example into an item of packaging. The second path can comprise a second aperture sized to permit egress of slack (for example for collection and re-use), but not of product.

The hopper can further comprise a retaining wall, wherein the hopper is configured such that the second aperture is a gap between the gate, when in the closed position, and a lower end of the retaining wall.

Preferably the first path and second path extend in different directions. For instance, the hopper can be further configured such that, when the gate is in the open position, the first path directs contents of the hopper out of the hopper under gravity in a first direction. The hopper can be further configured such that, when the gate is in the closed position, the second path directs slack out of the hopper under gravity in a second direction, angled with respect to the first direction.

The retaining wall can be at an acute angle to the vertical such that, when the gate is in the open position, contents of the hopper pass over the retaining wall out of the hopper in the first direction.

The hopper can be configured such that, when the gate is in the closed position, the gate is at an acute angle to the vertical such that slack passes over the gate out of the hopper in the second direction.

The hopper can be configured such that there is a lateral offset between where contents of the hopper exit the hopper via the first path and where slack exits the hopper via the second path. In this way they can be directed into separate vessels.

The hopper can be configured such that, when the gate is in the closed position, a distal end of the gate is laterally offset from the lower end of the retaining wall. In this way the excess slack can be directed into a separate vessel from the product.

The hopper can be configured such that, when the gate is in the closed position, the gate and the retaining wall slope towards one another, with the retaining wall stopping short of the gate to form the gap and the gate extending beyond where the gate and the retaining wall would otherwise intersect. In this way the excess slack can be directed into a separate vessel from the product.

The hopper can comprise a hinge, wherein the gate is configured to be moveable between the open and closed positions by rotation about the hinge. The hopper can be a weighhopper, pool hopper, booster hopper, timing hopper, output hopper or discharge hopper.

According to modifications of the first aspect, there is provided a hopper comprising two gates, a first gate as discussed above and a further second gate.

In accordance with claim 4 such hopper with double gates comprises the features any of the embodiments discussed above and a second gate moveable between open and closed positions, such that:
when the first and second gates are in their respective open positions the first path extends between the first and second gates; and
when the first and second gates are in their respective closed positions the first path is blocked and the second path extends between the first and second gates.

Thus the first aperture is defined between the first and second gates in their respective open positions, and the second aperture is defined between the first and second gates in their respective closed positions.

Preferably the lower end of the retaining wall is the lower end of the second gate.

Preferably the hopper is configured to move the first and second gates between their respective closed and open positions substantially simultaneously. Such examples in which the first and second gates of a hopper are opened simultaneously (i.e. together or in unison) provide a sudden shock to the contents of the hopper as they are released down the first path. This is particularly well-suited to use with sticky products or combinations of product and slack which might otherwise adhere or stick to the inside of the hopper. Thus hoppers with two gates may be more consistent in discharging product and more reliable.

The hopper may be configured such that, when the first and second gates are in their respective closed positions, a distal end of the first gate is laterally offset from the distal end of a second gate.

The hopper may be configured such that, when the first and second gates are in their respective closed positions, the first and second gates slope towards one another, with the second gate stopping short of the first gate to form the gap and the first gate extending beyond where the gates would otherwise intersect.

The hopper may be configured such that, the length of the first gate is at least 1.2 times greater than the length of the second gate, more preferably at least 1.5 times greater.

The hopper may further comprise a second hinge, wherein the second gate is configured to be moveable between the open and closed positions by rotation about the second hinge.

According to a second aspect, there is provided apparatus for separating excess slack from a mixture of product and slack in accordance with claim 9. The apparatus comprises: the hopper described above; a first chute located so as to receive contents of the hopper exiting the hopper via the first path when the gate is in the open position; and a second chute located so as to receive slack exiting the hopper via the second path when the gate is in the closed position.

The first chute can be arranged with respect to the retaining wall of the hopper such that, when the gate is in the open position, contents of the hopper pass under gravity smoothly from the retaining wall of the hopper onto a receiving surface of the chute. This reduces the chances of any slack coating the product becoming dislodged, since there should be no jolting of the product in the transition from the hopper to the first chute.

The first chute can be formed as a filter configured to permit slack entering the first chute to exit through the first chute into the second chute, but not to permit product entering the first chute to exit through the first chute into the second chute. This allows even more excess slack to be separated from the product prior to packaging, including any slack which becomes dislodged from the product as it enters or traverses the first chute.

The second chute can be arranged concentrically around the first chute. This increases the chances of excess slack reaching the second chute, even if the product bounces around within the first chute and/or there is significant air movement within the first chute which causes the excess slack to move in different directions from the product.

According to a third aspect, there is provided a packaging apparatus in accordance with claim 10 comprising the apparatus described above and packaging filling apparatus located at a lower end of the first chute. The packaging filling apparatus is arranged such that contents of the hopper received by the first chute pass under gravity smoothly down the receiving surface of the chute into an item of packaging. The packaging apparatus further comprises sealing apparatus configured to seal the item of packaging once contents of the hopper received by the first chute have passed down the receiving surface into the item of packaging. This arrangement reduces the chances of any slack coating the product becoming dislodged since there should be no jolting of the product as it slides down the receiving surface of the chute into the item of packaging. The lack of any jolts should also reduce the quantity of slack particles floating in the air (as opposed to those sliding together with the product down the receiving surface of the chute), which lessens the risk of floating particles becoming caught in the seal and reducing its quality.

According to a fourth aspect, there is provided a method of diverting excess slack away from a mixture of product and slack in accordance with claim 12. The method comprises:
a) introducing a mixture of product and slack into a hopper according to any one of claims 1 to 3, while the gate is in the closed position blocking a first path out of the hopper and thereby retaining product in the hopper, but permitting slack to exit the hopper via a second path;
b) subsequently moving the gate into the open position such that contents of the hopper exit the hopper via the first path; and
c) subsequently moving the gate into the closed position such that the first path is blocked and excess slack remaining in the hopper exits the hopper via the second path.

In accordance with claim 15, the method comprises introducing a mixture of product and slack into a hopper according to any one of claims 4 to 8, the hopper comprising a second gate moveable between open and closed positions, and step a) may be performed while the first and second gates are in their respective closed positions blocking a first path out of the hopper and thereby retaining product in the hopper, but permitting slack to exit the hopper via a second path.

Step b) comprises moving the first and second gates into their respective open positions such that contents of the hopper exit the hopper via the first path, and step c) comprises moving the first and second gates into their respective closed positions such that the first path is blocked and excess slack remaining in the hopper exits the hopper via the second path.

Preferably step b) comprises moving the first and second gates into their respective open positions substantially simultaneously. Opening both gates at the same time or in unison reduces the chance that the contents of the hopper adhere to the gates or the inside of the hopper. Thus product may be discharged more accurately and reliability is improved.

Such steps involve opening and closing both of the gates to discharge product and slack from the hopper. However, in some alternative cases product and slack could also be released from the hopper via the first path in step b) by opening a single gate of the first and second gates (i.e. by moving either the first gate or second gate into its respective open position). In this case only the corresponding gate opened in step b) would need to be returned back to its respective closed position in step c).

The method can further comprise repeating all of steps a) to c) consecutively, wherein the second iteration of step b) occurs at least 400 ms after the first iteration of step c). The pause allows time for the excess slack to exit the hopper.

The method can further comprise, following step a):
(i) obtaining a time series of a plurality of weight measurements of the contents of the hopper; and
(ii) making a determination, based on the plurality of weight measurements, that the weight of the hopper contents has stabilised;
wherein step b) is only performed once said determination has been made. This ensures that all excess slack which can exit the hopper via the second path has done so before the gate is opened to allow the remaining hopper contents to exit via the first path.

The method can further comprise:
I. concurrently with step b), allowing the contents of the hopper exiting the hopper via the first path to pass smoothly under gravity from the hopper into an item of packaging; and
II. subsequently sealing the item of packaging. This reduces the chances of any slack coating the product becoming dislodged, since there should be no jolting of the product in the transition from the hopper to the item of packaging.

The method can further comprising filtering slack out of contents of the hopper exiting the hopper via the first path.

The hopper used in the method can be the hopper described above. The method can be performed using the apparatus described above.

### BRIEF DESCRIPTION OF THE FIGURES

Aspects of the present disclosure will now be described by way of example with reference to the accompanying figures. In the figures:
Figure 1A illustrates example apparatus for use in a packaging process;
Figure 1B provides detail on a hopper of Figure 1B;
Figure 1C is a schematic cross-section of part of the example apparatus shown in Figure 1A with the example weigh hopper closed;
Figure 1D is a similar schematic showing the example weigh hopper open; Figure 2 is a flowchart of an example method of separating excess slack from a mixture of product and slack;
Figure 3A is a schematic cross-section of an example apparatus for use in a packaging process shown with the gates of an example hopper closed; and,
Figure 3B is a schematic cross-section showing the gates of the example hopper shown in Figure 3A open.

### DETAILED DESCRIPTION OF THE FIGURES

The following description is presented to enable any person skilled in the art to make and use the system, and is provided in the context of a particular application. Various modifications to the disclosed embodiments will be readily apparent to those skilled in the art. The hopper in accordance with the invention is defined by claim 1 or claim 4, the method in accordance with the invention is defined by claim 12 or claim 15.

There will now be described a hopper which can be used for separating excess slack from a mixture of product and slack. The hopper has a gate which can be opened and closed. When the gate is open any product and/or slack contained in the hopper is free to exit via a first path. When the gate is closed it blocks the first path, but there is a second path out of the hopper available which allows any slack contained in the hopper to exit. The second path is configured such that it cannot be used by product, only slack. In this way, excess slack can be separated from a mixture of product and slack.

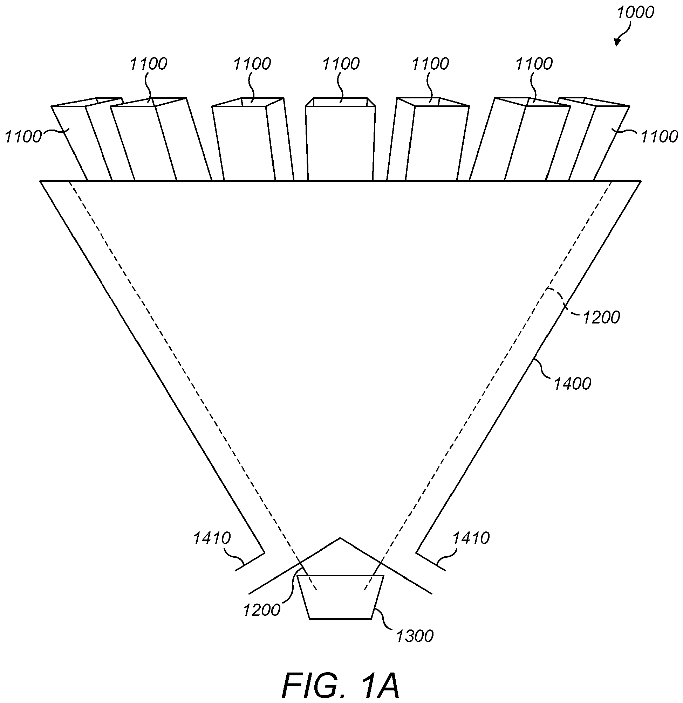

Figure 1A shows an example of how such a hopper could be used in a packaging process.

In the example apparatus 1000 illustrated pool hoppers (not shown) drop a mixture of product and slack, such as jelly sweets in sugar, into a ring of weigh hoppers 1100.

The weigh hoppers 1100 comprise sensors (not shown) to allow the weight of their contents to be measured. In this way, a plurality of the weigh hoppers can be selected, for example by means of computer control, to have their contents combined into a package having a weight as close as possible to a target weight, e.g. 250 g.

Once the plurality of weigh hoppers 1100 have been selected, they open gates (not shown), which allows contents of those selected hoppers to drop down through a discharge chute 1200 (shown using dotted lines to illustrate its hidden location) into a timing hopper 1300.

The timing hopper 1300 then drops its contents into a packaging bag (not shown), which is subsequently sealed. The process may then be repeated.

In this example, both the weigh hoppers 1100 and the discharge chute 1200 are used to separate excess slack out of the mixture of product and slack provided by the pool hoppers, into a slack chute 1400. Slack is then extracted from the slack chute 1400 at connections 1410 and is fed back into the pool hoppers to reduce wastage.

The discharge chute 1200 is concentrically surrounded by the slack chute 1400, with the two chutes being spaced apart so that slack can pass between them. The discharge chute 1200 is formed of a mesh having apertures smaller than the average product size, so that product cannot pass through the mesh, but larger than the average size of a slack particle, so that slack can pass through the mesh into the slack chute 1400. The discharge chute 1200 therefore acts as a slack filter.

The apparatus is all arranged such that the last shock to the slack-coated product before it is dispensed into packaging is when it is dropped into the weigh hoppers 1100. In this way, the quantity of coating dislodged from the product beyond this point is minimised. This reduces the risk of free-floating slack interrupting the bag seal and reduces the quantity of free-floating slack in the final package.

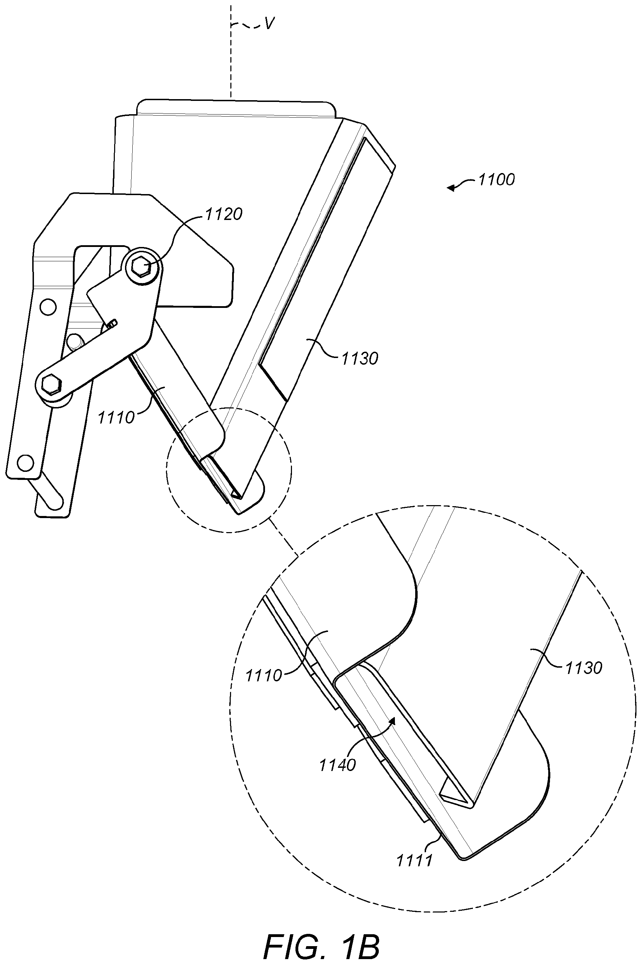

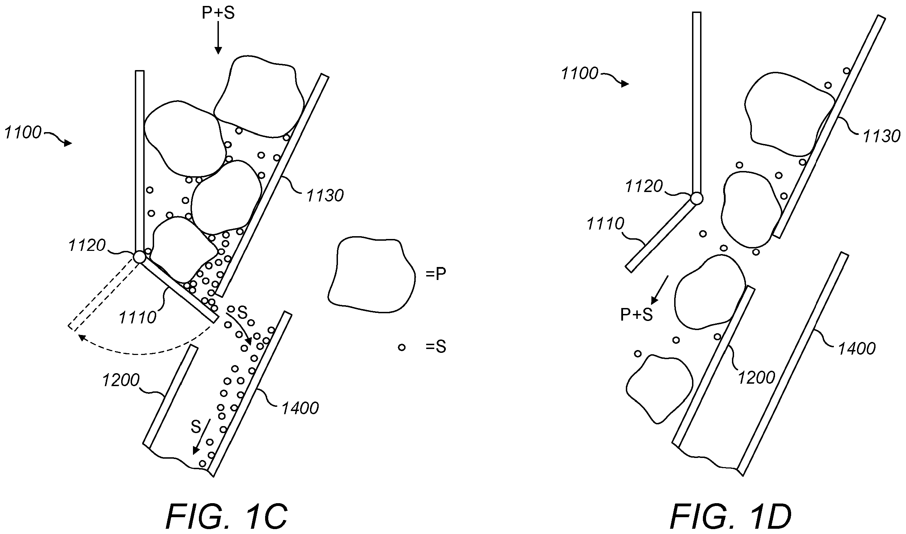

The weigh hoppers 1100 of Figure 1A, and how they separate excess slack from the mixture of product of slack introduced into them, will now be described in further detail in relation to Figures 1B to 1D. Figure 1B is a three dimensional drawing of an example weigh hopper 1100. Figure 1C is a schematic cross-section of part of the example apparatus 1000 shown in Figure 1A with the example weigh hopper 1100 closed. Figure 1D is a similar schematic showing the example weigh hopper 1100 open.

Figure 1B shows a weigh hopper 1100 with its gate 1110 in a closed position. The gate 1110 is controllable to move between the closed position and an open position about a hinge 1120, as illustrated by Figures 1C and 1D.

In the closed position the gate 1110 is angled with respect to the vertical, as indicated by the line marked V. A retaining wall 1130 of the hopper is also angled with respect to the vertical and slopes down towards the gate 1110, stopping just short of it to leave a gap 1140 large enough for slack to fit through but not large enough for product to fit through. A lip 1111 of the gate 1110 protrudes beyond the retaining wall 1130.

When the mixture of product and slack (P+S in Figure 1C) is introduced into the closed hopper 1100, the product is retained between the gate 1110 and the retaining wall 1130. However excess slack (S) flows out over the lip 1111 and into the slack chute 1400.

In order to allow time for the contents of the hopper to settle and thus for the weight of the hopper contents to stabilise, a delay time of, for example, 800 ms can be introduced between closing and opening of the gate 1110.

Alternatively or additionally, the weight of the weigh hopper contents can be continuously monitored so that selection of the appropriate weigh hoppers, and opening of their respective gates, can be performed as soon as the weight of all of the weigh hoppers has stabilised, but not before. For example, weight measurements can be taken of the contents of each of the hoppers on a periodic basis, for example once every 10 ms. The weight of the contents of a particular hopper could be determined to have stabilised if three consecutive measurements are of the same value, or within a range of, for example, 0.15 g.

When the gate 1110 is opened, as shown in Figure 1D, whatever contents remains in the hopper slides smoothly off the retaining wall 1130 onto a receiving surface of the discharge chute 1200, which is at substantially the same angle to the vertical as the retaining wall 1130 in order to reduce the risk of product coating being dislodged in the transition.

In some alternative examples, instead of both the gate and the retaining wall being at an acute angle to the vertical when the gate is closed, the retaining wall could be vertical, with the discharge chute directly below.

In some alternative examples, the lip of the gate could bend so that slack is directed off the lip in a different direction to the direction in which the rest of the gate extends.

In some alternative examples the gap could be filled with a mesh to filter out excess slack. In those examples the gap could be larger, since product would be prevented from falling through it by the mesh.

In some alternative examples, the gate could slide back out of the way of the top of the discharge chute to open the hopper, instead of pivoting.

In some alternative examples, suction could be used to remove excess slack instead of gravity. For example, the gap for slack egress could be not at the lower end of the hopper but higher up, in one of the hopper walls, and could connect to a vacuum pump so that excess slack can be sucked from the hopper.

In all of the above examples, a hopper is provided for diverting excess slack away from a mixture of product and slack. The hopper comprises a gate moveable between open and closed positions. The gate is configured such that, when the gate is in the open position a first path is provided for contents of the hopper, comprising a mixture of product and slack, to exit the hopper. When the gate is in the closed position the first path is closed by the gate so that product is retained in the hopper and a second path, different from the first path, is provided for slack to exit the hopper.

The first path can comprise a first aperture sized to permit egress of both product and slack and the second path can comprise a second aperture (such as the gap 1440 of the example of Figure 1) sized to permit egress of slack but not of product.

The first and second apertures can be located so that product and/or slack can fall through them under gravity as in the example of Figures 1.

Alternatively, the product and/or slack could be conveyed out of the hopper by other means, for example suction, e.g. slack could be allowed to settle in the hopper together with product, but then siphoned off from above. In that case, depending on the type of product and slack, the aperture through which the slack is sucked could in fact be large enough to admit egress of product, so long as the vacuum is weak enough that it will never pick up any of the product, only the slack.

The hopper could comprise a retaining wall, wherein the hopper is configured such that the second aperture is a gap between the gate, when in the closed position, and a lower end of the retaining wall, as in the example of Figure 1.

The hopper can be configured such that when the gate is in the open position the first path directs contents of the hopper out of the hopper under gravity in a first direction; and when the gate is in the closed position the second path directs slack out of the hopper under gravity in a second direction, angled with respect to the first direction. The first direction could be vertical. Alternatively, both the first and second directions could be at an angle to the vertical, as in the examples of Figure 1.

The retaining wall can be at an acute angle to the vertical such that, when the gate is in the open position, contents of the hopper pass over the retaining wall out of the hopper in the first direction as in the examples of Figure 1. Depending on the type of hopper contents, it may slide, flow or roll over the retaining wall.

The hopper can be configured such that, when the gate is in the closed position, the gate is at an acute angle to the vertical such that slack passes over the gate out of the hopper in the second direction, as in the examples of Figure 1.

The hopper can be configured such that there is a lateral offset between where contents of the hopper exit the hopper via the first path and where slack exits the hopper via the second path. (This is the case in the example of Figure 1, though it need not be for examples where excess slack is separated by suction.)

The hopper can be configured such that, when the gate is in the closed position, a distal end of the gate is laterally offset from the lower end of the retaining wall to form a lip as in the examples of Figure 1.

The hopper can be configured such that, when the gate is in the closed position, the gate and the retaining wall slope towards one another, with the retaining wall stopping short of the gate to form the gap and the gate extending beyond where the gate and the retaining wall would otherwise intersect, as in the example of Figure 1.

The hopper can comprise a hinge, such as the hinge 1120 of Figure 1, wherein the gate is configured to be moveable between the open and closed positions by rotation about the hinge as in the example of Figure 1. Alternatively, the gate could be configured to slide between the open and closed positions.

The hopper can be a weighhopper - i.e. a hopper capable of weighing its contents - but it is not essential. In some examples the hopper may additionally or alternatively be a pool hopper, booster hopper, timing hopper, output hopper or discharge hopper.

Apparatus for separating excess slack from a mixture of product and slack can comprise: any of the hoppers described above; a first chute located so as to receive contents of the hopper exiting the hopper via the first path when the gate is in the open position, such as the discharge chute 1200 of the example of Figure 1; and a second chute located so as to receive slack exiting the hopper via the second path when the gate is in the closed position, such as the slack chute 1400 of the example of Figure 1.

The first chute can be arranged with respect to the retaining wall of the hopper such that, when the gate is in the open position, contents of the hopper pass under gravity smoothly from the retaining wall of the hopper onto a receiving surface of the chute, as in the example of Figures 1.

The first chute can be formed as a filter configured to permit slack entering the first chute to exit through the first chute into the second chute, but not to permit product entering the first chute to exit through the first chute into the second chute, as described above in relation to the example of Figure 1.

The second chute can be arranged concentrically around the first chute, as in the example of Figure 1.

Packaging apparatus can comprise: the apparatus described above; packaging filling apparatus located at a lower end of the first chute and arranged such that contents of the hopper received by the first chute pass under gravity smoothly down the receiving surface of the chute into an item of packaging; and sealing apparatus configured to seal the item of packaging once contents of the hopper received by the first chute have passed down the receiving surface into the item of packaging. Alternatively, instead of providing the first chute to transport product into an item of packaging, the contents of the hopper could be dropped directly into an item of packaging before it is sealed.

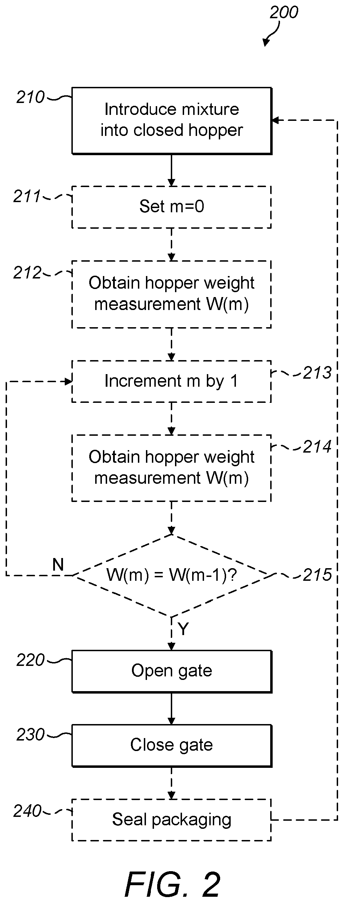

Figure 2 is a flowchart illustrating an example method 200 of diverting excess slack away from a mixture of product and slack, where dotted lines indicate optional steps. At step 210 a mixture of product and slack is introduced into a hopper comprising a gate moveable between open and closed positions, while the gate is in the closed position blocking a first path out of the hopper and thereby retaining product in the hopper, but permitting slack to exit the hopper via a second path.

At step 220 the gate is then moved into the open position such that contents of the hopper exit the hopper via the first path.

At step 230 the gate is then moved into the closed position such that the first path is blocked and excess slack remaining in the hopper exits the hopper via the second path.

These steps can optionally be repeated.

Optionally, between steps 210 and 220, there may be further steps 211 to 215 to obtain a time series of a plurality of weight measurements of the contents of the hopper and make a determination, based on the plurality of weight measurements, that the weight of the hopper contents has stabilised. In the illustrated example this is achieved by setting an integer m to zero at step 211, obtaining a hopper weight measurement *W(m)* at step 212, incrementing m by one at step 213, obtaining a further hopper weight measurement *W(m)* at step 214 and determining whether *W(m) = W(m-1)* at step 215. If the answer is yes then the weight of the hopper has stabilised and the flow proceeds to step 220. If the answer is no then the flow returns to step 213.

Concurrently with step 220 the contents of the hopper exiting the hopper via the first path can optionally be allowed to pass smoothly under gravity from the hopper into an item of packaging and the item of packaging can optionally be sealed at step 240.

Slack can optionally be filtered out of contents of the hopper exiting the hopper via the first path.

The method 200 can optionally use the apparatus of the example of Figure 1.

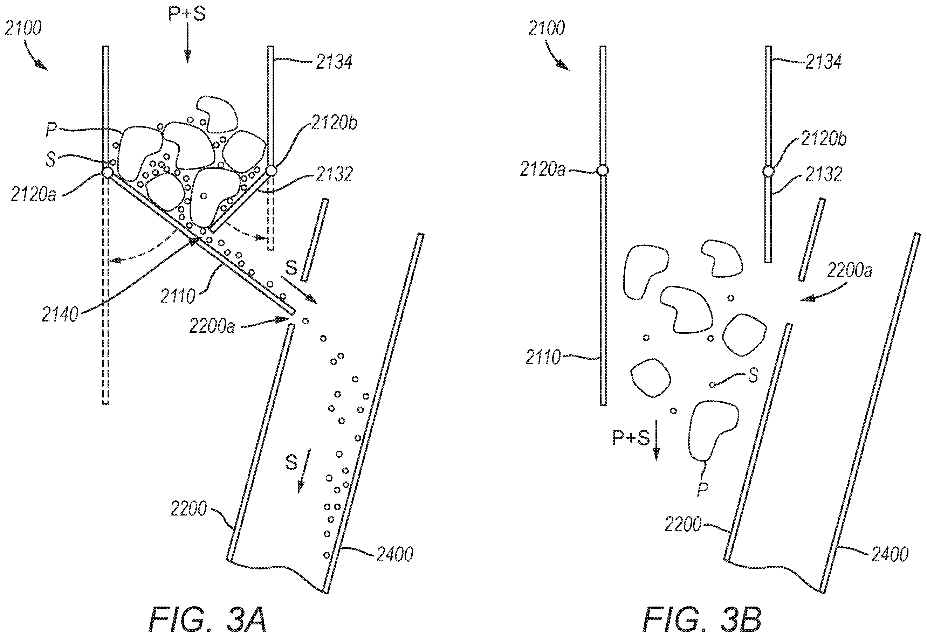

Equally, the method 200 may use an apparatus as shown in Figure 3, which shows a hopper 2100 having two gates 2110, 2132. These gates 2110, 2132 may be opened and closed together so as to open and block the first path. Such examples with two gates are particularly well suited for use with sticky products (e.g. meat coated with a marinade, sticky sweets) which may otherwise adhere to a stationary retaining wall, especially in hoppers with angled retaining walls 1130 as shown in Figure 1.

In more detail, Figures 3A and 3B show a hopper 2100 with a movable first gate 2110 and an opposing moveable second gate 2132. The second gate 2132 forms the lower portion of a retaining wall which further comprises an upper fixed portion 2134. Thus, the features of the lower end of the retaining wall discussed above apply correspondingly to the lower end of the second gate 2132.

The hopper 2100 of Figure 3 can also be used for separating excess slack from a mixture of product and slack. When the gates 2110, 2132 are in their respective open positions any product and/or slack contained in the hopper 2100 is free to exit the hopper 2100 via a first path. When the gates 2110, 2132 are in their respective closed positions they combine to block or close the first path, retaining product in the hopper 2100. However, when the gates 2110, 2132 are in their respective closed positions a second path from the hopper 2100 is provided through which slack (which is typically a liquid and/or of relatively small dimensions relative to the product) may exit the hopper 2100. The second path is configured such that it cannot be used by product only slack. In this way, excess slack can be separated from a mixture of product and slack.

Also shown in Figures 3A and 3B are a discharge chute 2200 concentrically surrounded by a slack chute 2400, the two chutes being spaced apart so that slack can pass between them. The discharge chute 2200 is preferably formed of a mesh having apertures smaller than the average product size, so that product cannot pass through the mesh, but larger than the average size of a slack particle, so that slack can pass through the mesh into the slack chute 2400. Such a discharge chute 2200 therefore acts as a slack filter.

Figure 3A shows the hopper 2100 in a closed arrangement, when each of the first and second gates 2110, 2132 are in respective closed positions. As shown in this respective closed position the first gate 2110 is angled with respect to the vertical. Whereas, the second gate 2132 of the hopper 2100 is also angled with respect to the vertical and slopes down towards the first gate 2110, stopping just short of it to leave a gap 2140 (i.e. a second aperture) large enough for slack to fit through but not large enough for product to fit through. The first gate 2110 is longer than the second gate 2132, extending past the point where the first gate 2110 and second gate 2132 would otherwise intersect.

When a mixture of product and slack (P+S in Figure 3A) is introduced into the closed hopper 2100, the product is retained by the first and second gates 2110, 2132. However excess slack (S) flows out through a gap 2140 left between the first and second gates 2110, 2132. This gap 2140 between the gates 2110, 2132 through which the second path extends is smaller than the average minimum dimension of the product but larger than the average largest dimension of the slack. Thus slack passes through the gap 2140 and is separated from product.

The separated slack S passes over the longer first gate 2110, through an aperture 2200a (e.g. a hole or slot) in the discharge chute 2200 and into the slack chute 2400. In further embodiments in which the discharge chute 2200 is a mesh the slack S may pass through the discharge chute 2200 without the need for any further apertures. In some cases, the slack entering the discharge chute 2200 may be collected and reintroduced to the processing line at an earlier state.

Figure 3B shows the hopper 2100 in an arrangement when the first and second gates 2110, 2132 are in their respective open positions. These open positions 2110, 2132 are substantially vertical, as may occur if the first and second gates 2110, 2132 are allowed to fall under gravity. However, the gates 2110, 2132 may be held in alternative positions.

In this open arrangement, the contents of the hopper 2100 (i.e. the product P and any remaining slack S) is released under gravity along a first path into the discharge chute 2200, as indicated by the arrow P+S. This first path extends between the open gates 2110, 2132 between which is defined an aperture (i.e. the first aperture) which is sized to permit egress of both product and slack since the minimum distance between the gates 2110, 2132 is greater than the maximum dimension of each of the product and slack.

As discussed above, the product P which has travelled along this first path may then be packaged using a packaging machine with reduced levels of slack S.

As shown, the first and second gates 2110, 2132 rotate about hinges 2120a, 2120b so as to move between their respective closed and open positions (as indicated by the dash arrows and gates shown in Figure 3A). However, this is not essential and one or more of the gates 2110, 2132 could move in an alternative manner (e.g. sliding).

Preferably the first and second gates 2110, 2132 are opened substantially simultaneously - i.e. at the same time or in unison, rather than the gates 2110, 2132 being opened sequentially. Moving both gates 2110, 2132 together provides a significant shock to the contents of the hopper 2100, which acts to prevent sticky product from adhering to the inside of the hopper 2100 and not being discharged. However, in further embodiments the gates 2110, 2132 may be opened sequentially (e.g. to avoid unnecessary impacts to dry products which would generate more slack).

As will be appreciated from the Figures 3A and 3B, the first path in which product and slack may pass and the second path along which only slack travels are laterally offset and extend in different directions. However, this is not essential (e.g. in cases where slack is removed from the hopper by suction).

The hopper may be controlled and weighed as discussed above in reference to Figures 1 and 2. For instance a delay time of, for example, 800 ms can be introduced between closing and opening of the gate to allow the contents to stabilise before weighing. Alternatively, the weight of the hopper can be continuously or periodically monitored and a final weight measurement be taken when the weight has stabilised.

Similarly, in further embodiments the hopper 2100 shown in Figure 3 may additionally comprise any of the optional or preferable features discussed above with reference to Figures 1 and 2. For instance, the first gate 2110 may comprise a curved or angled lip such that, when the first gate 2110 is closed, slack travelling along the second path will be directed or steered in a desired direction.

Other embodiments will be apparent to those skilled in the art from consideration of the specification and practice of the embodiments disclosed herein. It is intended that the specification and examples be considered as exemplary only.

The terms "top", "bottom", "side", "front", "back", "forward", "rear" and other terms describing the orientation of features are not intended to be limiting and are purely included in order to facilitate the description of the relative location of these features in the context of the accompanying drawings. In use, or during storage, the features may be disposed in other orientations.

In addition, where this application has listed the steps of a method or procedure in a specific order, it could be possible, or even expedient in certain circumstances, to change the order in which some steps are performed. That is, the operations/steps may be performed in any order, unless otherwise specified, and embodiments may include additional or fewer operations/steps than those disclosed herein. It is further contemplated that executing or performing a particular operation/step before, contemporaneously with, or after another operation is in accordance with the described embodiments.

## Claims

1. A hopper (1100) for diverting excess slack away from a mixture of product and slack, the hopper comprising a first gate (1110) moveable between open and closed positions and a retaining wall (1130), wherein the first gate is configured such that:
when the first gate is in the open position a first path is provided for contents of the hopper, comprising a mixture of product and slack, to exit the hopper; and
when the first gate is in the closed position the first path is closed by the first gate so that product is retained in the hopper and a second path, different from the first path, is provided for slack to exit the hopper; and
wherein there is a lateral offset between where contents of the hopper exit the hopper via the first path and where slack exits the hopper via the second path;
**characterized by** the hopper being further configured such that, when the first gate is in the closed position, the first gate and the retaining wall slope towards one another, with the retaining wall stopping short of the first gate to form a gap (1140) and the first gate extending beyond where the first gate and the retaining wall would otherwise intersect such that a distal end of the first gate is laterally offset from the lower end of the retaining wall.

2. The hopper (1110) of claim 1, wherein the first path comprises a first aperture sized to permit egress of both product and slack and the second path comprises a second aperture sized to permit egress of slack but not of product, wherein preferably the hopper is configured such that the second aperture is the gap between the first gate, when in the closed position, and the lower end of the retaining wall.

3. The hopper (1110) of any of claims 1 to 2, configured such that:
when the first gate is in the open position the first path directs contents of the hopper out of the hopper under gravity in a first direction; and
when the first gate is in the closed position the second path directs slack out of the hopper under gravity in a second direction, angled with respect to the first direction;
and wherein preferably:
the retaining wall is at an acute angle to the vertical such that, when the first gate is in the open position, contents of the hopper pass over the retaining wall out of the hopper in the first direction; and/or,
the hopper is configured such that, when the first gate is in the closed position, the first gate is at an acute angle to the vertical such that slack passes over the first gate out of the hopper in the second direction.

4. A hopper (2100) for diverting excess slack away from a mixture of product and slack, the hopper (2100) comprising a first gate (2110) moveable between open and closed positions and a retaining wall (2134), wherein the first gate is configured such that:
when the first gate is in the open position a first path is provided for contents of the hopper, comprising a mixture of product and slack, to exit the hopper; and
when the first gate is in the closed position the first path is closed by the first gate so that product is retained in the hopper and a second path, different from the first path, is provided for slack to exit the hopper;
and wherein the retaining wall comprises a second gate (2132) moveable between open and closed positions, such that:
when the first and second gates (2110, 2132) are in their respective open positions the first path extends between the first and second gates; and
when the first and second gates are in their respective closed positions the first path is blocked and the second path extends between the first and second gates;
wherein there is a lateral offset between where contents of the hopper exit the hopper via the first path and where slack exits the hopper via the second path;
the hopper being further configured such that, when the first and second gates are in their respective closed positions, the first and second gates slope towards one another, with the second gate stopping short of the first gate to form a gap (2140) and the first gate extending beyond where the gates would otherwise intersect such that a distal end of the first gate is laterally offset from a distal end of the second gate.

5. The hopper (2140) of claim 4, wherein the first path comprises a first aperture sized to permit egress of both product and slack and the second path comprises a second aperture sized to permit egress of slack but not of product, wherein preferably the hopper is configured such that the second aperture is the gap between the first gate, when in the closed position, and the lower end of the second gate.

6. The hopper (2140) of any of claims 4 to 5, configured such that:
when the first gate is in the open position the first path directs contents of the hopper out of the hopper under gravity in a first direction; and
when the first gate is in the closed position the second path directs slack out of the hopper under gravity in a second direction, angled with respect to the first direction;
and wherein preferably:
the retaining wall is at an acute angle to the vertical such that, when the first gate is in the open position, contents of the hopper pass over the retaining wall out of the hopper in the first direction; and/or,
the hopper is configured such that, when the first gate is in the closed position, the first gate is at an acute angle to the vertical such that slack passes over the first gate out of the hopper in the second direction.

7. The hopper (2140) of any of claims 4 to 6, configured to move the first and second gates between their respective closed and open positions substantially simultaneously.

8. The hopper (2140) of any of claims 4 to 7, wherein the length of the first gate (2110) is at least 1.2 times greater than the length of the second gate (2132), more preferably at least 1.5 times greater.

9. Apparatus (1000) for separating excess slack from a mixture of product and slack, the apparatus comprising:
a hopper (1100, 2100) according to any preceding claim;
a first chute (1200, 2200) located so as to receive contents of the hopper exiting the hopper via the first path when the first gate is in the open position; and
a second chute (1400, 2400) located so as to receive slack exiting the hopper via the second path when the first gate is in the closed position.

10. The apparatus (1000) of claim 9, wherein the first chute is formed as a filter configured to permit slack entering the first chute to exit through the first chute into the second chute, but not to permit product entering the first chute to exit through the first chute into the second chute, wherein preferably the second chute is arranged concentrically around the first chute.

11. Packaging apparatus comprising:
the apparatus (1000) of any of claims 9 to 10;
packaging filling apparatus located at a lower end of the first chute and arranged such that contents of the hopper received by the first chute pass under gravity smoothly down the receiving surface of the chute into an item of packaging; and
sealing apparatus configured to seal the item of packaging once contents of the hopper received by the first chute have passed down the receiving surface into the item of packaging.

12. A method of diverting excess slack away from a mixture of product and slack, the method comprising:
a) introducing (210) a mixture of product and slack into a hopper (1100) according to any of claims 1 to 3 while the first gate (1110) is in the closed position blocking a first path out of the hopper and thereby retaining product in the hopper, but permitting slack to exit the hopper via a second path;
b) subsequently moving (220) the first gate (1110) into the open position such that contents of the hopper exit the hopper via the first path; and
c) subsequently moving (230) the first gate into the closed position such that the first path is blocked and excess slack remaining in the hopper exits the hopper via the second path.

13. The method of claim 12, further comprising:
repeating all of steps a) to c) consecutively, wherein the second iteration of step b) occurs at least 400 ms after the first iteration of step c); and/or,
following step a): (i) obtaining a time series of a plurality of weight measurements of the contents of the hopper; and (ii) making a determination, based on the plurality of weight measurements, that the weight of the hopper contents has stabilised; wherein step b) is only performed once said determination has been made; and/or,
concurrently with step b), allowing the contents of the hopper exiting the hopper via the first path to pass smoothly under gravity from the hopper into an item of packaging; and subsequently sealing the item of packaging.

14. The method of any of claims 12 to 13, further comprising filtering slack out of contents of the hopper exiting the hopper via the first path.

15. A method of diverting excess slack away from a mixture of product and slack, the method comprising:
a) introducing a mixture of product and slack into a hopper (2100) according to any of claims 4 to 8 while the first and second gates (2100, 2132) are in their respective closed positions blocking a first path out of the hopper and thereby retaining product in the hopper, but permitting slack to exit the hopper via a second path;
b) subsequently moving the first and second gates (2100, 2132) into their respective open positions such that contents of the hopper exit the hopper via the first path; and
c) subsequently moving the first and second gates (2100, 2132) into their respective closed positions such that the first path is blocked and excess slack remaining in the hopper exits the hopper via the second path.

16. The method of claim 15, wherein step b) comprises moving the first and second gates into their respective open positions substantially simultaneously.

17. The method of any of claims 15 to 16, further comprising:
repeating all of steps a) to c) consecutively, wherein the second iteration of step b) occurs at least 400 ms after the first iteration of step c); and/or;
following step a): (i) obtaining a time series of a plurality of weight measurements of the contents of the hopper; and (ii) making a determination, based on the plurality of weight measurements, that the weight of the hopper contents has stabilised; wherein step b) is only performed once said determination has been made; and/or,
concurrently with step b), allowing the contents of the hopper exiting the hopper via the first path to pass smoothly under gravity from the hopper into an item of packaging; and subsequently sealing the item of packaging.

18. The method of any of claim 15 to 17, further comprising filtering slack out of contents of the hopper exiting the hopper via the first path.

## Patentansprüche

1. Trichter (1100) zum Umleiten von überschüssigen Feinteilen weg von einer Mischung aus Produkt und Feinteilen, wobei der Trichter eine erste Klappe (1110), die zwischen offenen und geschlossenen Positionen beweglich ist, und eine Stützwand (1130) umfasst, wobei die erste Klappe derart ausgelegt ist, dass:
Wenn sich die erste Klappe in der offenen Position befindet, ein erster Weg für Inhalte des Trichters bereitgestellt wird, die eine Mischung aus Produkt und Feinteilen zum Verlassen des Trichters umfassen; und
wenn sich die erste Klappe in der geschlossenen Position befindet, wird der Weg von der ersten Klappe geschlossen, sodass Produkt im Trichter zurückgehalten wird und ein zweiter Weg, verschieden vom ersten Weg, wird bereitgestellt damit Feinteile den Trichter verlassen können; und
wobei es einen seitlichen Versatz zwischen der Stelle, wo Inhalte des Trichters den Trichter über den ersten Weg verlassen und der Stelle gibt, wo Feinteile den Trichter über den zweiten Weg verlassen;
**dadurch gekennzeichnet, dass** der Trichter ferner derart ausgelegt ist, dass, wenn sich die erste Klappe in der geschlossenen Position befindet, sich die erste Klappe und die Stützwand zueinander neigen, wobei die Stützwand kurz vor der ersten Klappe stoppt, um einen Spalt (1140) zu bilden, und sich die erste Klappe darüber hinaus erstreckt, wo sich die erste Klappe und die Stützwand andernfalls derart schneiden würden, dass ein fernes Ende der ersten Klappe seitlich vom unteren Ende der Stützwand versetzt ist.

2. Trichter (1110) nach Anspruch 1, wobei der erste Weg eine erste Öffnung umfasst, die bemessen ist, Austritt von sowohl Produkt als auch Feinteilen zu erlauben und der zweite Weg eine zweite Öffnung umfasst, die bemessen ist, Austritt von Feinteilen aber nicht von Produkt zu erlauben, wobei der Trichter vorzugsweise derart ausgelegt ist, dass die zweite Öffnung der Spalt zwischen der ersten Klappe, wenn in der geschlossenen Position befindlich, und dem unteren Ende der Stützwand ist.

3. Trichter (1110) nach einem der Ansprüche 1 bis 2, der derart ausgelegt ist, dass:
Wenn sich die erste Klappe in der offenen Position befindet, der erste Weg Inhalte des Trichters unter Schwerkraft aus dem Trichter in eine erste Richtung leitet; und
wenn sich die erste Klappe in der geschlossenen Position befindet, leitet der zweite Weg Feinteile unter Schwerkraft aus dem Trichter in eine zweite Richtung, die in Bezug auf die erste Richtung abgewinkelt ist;
und wobei vorzugsweise:
Die Stützwand in einem spitzen Winkel zur Vertikalen derart ist, dass, wenn sich die erste Klappe in der offenen Position befindet, Inhalte des Trichters über die Stützwand aus dem Trichter in die erste Richtung gehen; und/oder,
der Trichter derart ausgelegt ist, dass, wenn sich die erste Klappe in der geschlossenen Position befindet, die erste Klappe in einem spitzen Winkel derart zur Vertikalen ist, dass Feinteile über die erste Klappe aus dem Trichter in die zweite Richtung gehen.

4. Trichter (2100) zum Umleiten von überschüssigen Feinteilen weg von einer Mischung aus Produkt und Feinteilen, wobei der Trichter (2100) eine erste Klappe (2110), die zwischen offenen und geschlossenen Positionen beweglich ist, und eine Stützwand (2134) umfasst, wobei die erste Klappe derart ausgelegt ist, dass:
Wenn sich die erste Klappe in der offenen Position befindet, ein erster Weg für Inhalte des Trichters bereitgestellt wird, die eine Mischung aus Produkt und Feinteilen zum Verlassen des Trichters umfassen; und
wenn sich die erste Klappe in der geschlossenen Position befindet, wird der Weg von der ersten Klappe geschlossen, sodass Produkt im Trichter zurückgehalten wird und ein zweiter Weg, verschieden vom ersten Weg, wird bereitgestellt damit Feinteile den Trichter verlassen können;
und wobei die Stützwand eine zweite Klappe (2132) umfasst, die zwischen offenen und geschlossenen Positionen derart beweglich ist, dass:
Wenn sich die ersten und zweiten Klappen (2110, 2132) in ihren jeweiligen offenen Positionen befinden, sich der erste Weg zwischen den ersten und zweiten Klappen erstreckt; und
wenn sich die ersten und zweiten Klappen in ihren jeweiligen geschlossenen Positionen befinden, ist der erste Weg blockiert und der zweite Weg erstreckt sich zwischen den ersten und zweiten Klappen;
wobei es einen seitlichen Versatz zwischen der Stelle, wo Inhalte des Trichters den Trichter über den ersten Weg verlassen und der Stelle gibt, wo Feinteile den Trichter über den zweiten Weg verlassen;
wobei der Trichter ferner derart ausgelegt ist, dass, wenn sich die ersten und zweiten Klappen in ihren jeweiligen geschlossenen Positionen befinden, sich die ersten und zweiten Klappen zueinander neigen, wobei die zweite Klappe kurz vor der ersten Klappe stoppt, um einen Spalt (2140) zu bilden, und sich die erste Klappe darüber hinaus erstreckt, wo sich Klappen andernfalls derart schneiden würden, dass ein fernes Ende der ersten Klappe seitlich von einem fernen Ende der zweiten Klappe versetzt ist.

5. Trichter (2140) nach Anspruch 4, wobei der erste Weg eine erste Öffnung umfasst, die bemessen ist, Austritt von sowohl Produkt als auch Feinteilen zu erlauben und der zweite Weg eine zweite Öffnung umfasst, die bemessen ist, Austritt von Feinteilen aber nicht von Produkt zu erlauben, wobei der Trichter vorzugsweise derart ausgelegt ist, dass die zweite Öffnung der Spalt zwischen der ersten Klappe, wenn in der geschlossenen Position befindlich, und dem unteren Ende der zweiten Klappe ist.

6. Trichter (2140) nach einem der Ansprüche 4 bis 5, der derart ausgelegt ist, dass:
Wenn sich die erste Klappe in der offenen Position befindet, der erste Weg Inhalte des Trichters unter Schwerkraft aus dem Trichter in eine erste Richtung leitet; und
wenn sich die erste Klappe in der geschlossenen Position befindet, leitet der zweite Weg Feinteile unter Schwerkraft aus dem Trichter in eine zweite Richtung, die in Bezug auf die erste Richtung abgewinkelt ist;
und wobei vorzugsweise:
Die Stützwand in einem spitzen Winkel zur Vertikalen derart ist, dass, wenn sich die erste Klappe in der offenen Position befindet, Inhalte des Trichters über die Stützwand aus dem Trichter in die erste Richtung gehen; und/oder,
der Trichter derart ausgelegt ist, dass, wenn sich die erste Klappe in der geschlossenen Position befindet, die erste Klappe in einem spitzen Winkel derart zur Vertikalen ist, dass Feinteile über die erste Klappe aus dem Trichter in die zweite Richtung gehen.

7. Trichter (2140) nach einem der Ansprüche 4 bis 6, der ausgelegt ist, die ersten und zweiten Klappen wesentlich gleichzeitig zwischen ihren jeweiligen geschlossenen und offenen Positionen zu bewegen.

8. Trichter (2140) nach einem der Ansprüche 4 bis 7, wobei die Länge der ersten Klappe (2110) wenigstens 1,2-mal größer als die Länge der zweiten Klappe (2132), bevorzugter wenigstens 1,5-mal größer ist.

9. Vorrichtung (1000) zum Trennen von überschüssigen Feinteilen aus einer Mischung aus Produkt und Feinteilen, wobei die Vorrichtung umfasst:
Einen Trichter (1100, 2100) nach irgendeinem vorhergehenden Anspruch;
eine erste Schurre (1200, 2200), die positioniert ist, um Inhalte des Trichters zu empfangen, die den Trichter über den ersten Weg verlassen, wenn sich die erste Klappe in der offenen Position befindet; und
eine zweite Schurre (1400, 2400), die positioniert ist, um Feinteile zu empfangen, die den Trichter über den zweiten Weg verlassen, wenn sich die erste Klappe in der geschlossenen Position befindet.

10. Vorrichtung (1000) nach Anspruch 9, wobei die erste Schurre als ein Filter gebildet ist, der ausgelegt ist, in die erste Schurre eintretenden Feinteilen zu erlauben, durch die erste Schurre in die zweite Schurre auszutreten, aber in die erste Schurre eintretendem Produkt nicht zu erlauben, durch die erste Schurre in die zweite Schurre auszutreten, wobei die zweite Schurre vorzugsweise konzentrisch um die erste Schurre angeordnet ist.

11. Verpackungsvorrichtung, umfassend:
Die Vorrichtung (1000) nach einem der Ansprüche 9 bis 10;
Verpackung-Füllvorrichtung, die sich an einem unteren Ende der ersten Schurre befindet und derart eingerichtet ist, dass von der ersten Schurre empfangene Inhalte des Trichters unter Schwerkraft reibungslos der empfangenen Oberfläche der Schurre hinunter in einen Verpackungsartikel gelangt sind; und
Dichtungsvorrichtung, die ausgelegt ist, den Verpackungsartikel zu versiegeln, sobald von der ersten Schurre empfangene Inhalte des Trichters die empfangende Oberfläche hinunter in den Verpackungsartikel gelangt sind.

12. Verfahren zum Umleiten von überschüssigen Feinteilen weg von einer Mischung auf Produkt und Feinteilen, wobei das Verfahren umfasst:
a) Einführen (210) einer Mischung aus Produkt und Feinteilen in einen Trichter (1100) nach einem der Ansprüche 1 bis 3, während die erste Klappe (1110) in der geschlossenen Position befindet, welche einen ersten Weg aus dem Trichter blockiert und dadurch Produkt im Trichter zurückbehält, aber erlaubt, dass Feinteile den Trichter über einen zweiten Weg verlassen können;
b) nachfolgend Bewegen (220) der ersten Klappe (1110) in die offene Position derart, dass Inhalte des Trichters den Trichter über den ersten Weg verlassen können; und
c) nachfolgend Bewegen (230) der ersten Klappe in die geschlossene Position derart, dass der erste Weg blockiert ist und im Trichter verbleibende überschüssige Feinteile den Trichter über den zweiten Weg verlassen.

13. Verfahren nach Anspruch 12, ferner umfassend:
Wiederholen aller Schritte a) bis c) aufeinander folgend, wobei sich die zweite Wiederholung von Schritt b) wenigstens 400 ms nach der ersten Wiederholung von Schritt c) ereignet; und/oder,
Schritt a) folgend: (i) Erlangen einer Zeitreihe einer Vielzahl von Gewichtsmessungen der Inhalte des Trichters; und (ii) Treffen einer Feststellung, auf Basis der Vielzahl von Gewichtsmessungen, dass sich das Gewicht der Inhalte des Trichters stabilisiert hat; wobei Schritt b) nur ausgeführt wird, sobald die Feststellung getroffen worden ist; und/oder,
gleichzeitig mit Schritt b), Zulassen, dass die Inhalte des Trichters den Trichter unter Schwerkraft über den ersten Weg verlassen, um reibungslos unter Schwerkraft aus dem Trichter in einen Verpackungsartikel zu gelangen; und anschließend Versiegeln des Verpackungsartikels.

14. Verfahren nach einem der Ansprüche 12 bis 13, ferner das Filtern von Feinteilen aus Inhalten des Trichters umfassend, die den Trichter über den ersten Weg verlassen.

15. Verfahren zum Umleiten von überschüssigen Feinteilen weg von einer Mischung auf Produkt und Feinteilen, wobei das Verfahren umfasst:
a) Einführen einer Mischung aus Produkt und Feinteilen in einen Trichter (2100) nach einem der Ansprüche 4 bis 8, während sich die ersten und zweiten Klappen (2100, 2132) in ihren jeweiligen geschlossenen Positionen befinden, welche einen ersten Weg aus dem Trichter blockieren und dadurch Produkt im Trichter zurückbehalten, aber erlauben, dass Feinteile den Trichter über einen zweiten Weg verlassen können;
b) nachfolgend Bewegen der ersten und zweiten Klappen (2100, 2132) in ihre jeweiligen offenen Positionen derart, dass Inhalte des Trichters den Trichter über den ersten Weg verlassen können; und
c) nachfolgend Bewegen der ersten und zweiten Klappen (2100, 2132) in ihre jeweiligen geschlossenen Positionen derart, dass der erste Weg blockiert ist und im Trichter verbleibende überschüssige Feinteile den Trichter über den zweiten Weg verlassen.

16. Verfahren nach Anspruch 15, wobei Schritt b) das Bewegen der ersten und zweiten Klappen in ihre jeweiligen offenen Positionen wesentlich gleichzeitig umfasst.

17. Das Verfahren nach einem der Ansprüche 15 bis 16, ferner umfassend:
Wiederholen aller Schritte a) bis c) aufeinander folgend, wobei sich die zweite Wiederholung von Schritt b) wenigstens 400 ms nach der ersten Wiederholung von Schritt c) ereignet; und/oder;
Schritt a) folgend: (i) Erlangen einer Zeitreihe einer Vielzahl von Gewichtsmessungen der Inhalte des Trichters; und (ii) Treffen einer Feststellung, auf Basis der Vielzahl von Gewichtsmessungen, dass sich das Gewicht der Inhalte des Trichters stabilisiert hat; wobei Schritt b) nur ausgeführt wird, sobald die Feststellung getroffen worden ist; und/oder,
gleichzeitig mit Schritt b), Zulassen, dass die Inhalte des Trichters den Trichter unter Schwerkraft über den ersten Weg verlassen, um reibungslos unter Schwerkraft aus dem Trichter in einen Verpackungsartikel zu gelangen; und anschließend Versiegeln des Verpackungsartikels.

18. Verfahren nach einem der Ansprüche 15 bis 17, ferner das Filtern von Feinteilen aus Inhalten des Trichters umfassend, die den Trichter über den ersten Weg verlassen.

## Revendications

1. Trémie (1100) pour le détournement d'un excès de fines hors d'un mélange de produit et de fines, la trémie comprenant une première vanne (1110) pouvant être déplacée entre des positions ouverte et fermée, et une paroi de soutien (1130), la première vanne étant configurée de sorte que :
lorsque la première vanne se trouve dans sa position ouverte, ceci forme un premier chemin pour la sortie, hors de la trémie, du contenu de la trémie comprenant un mélange de produit et de fines ; et
lorsque la première vanne se trouve dans sa position fermée, le premier chemin est fermé par la première vanne de façon à maintenir le produit dans la trémie, et un deuxième chemin, distinct du premier chemin, est destiné à la sortie de fines hors de la trémie ; et
un décalage latéral existant entre le point où le contenu de la trémie sort de celle-ci par le premier chemin et le point où les fines sortent de la trémie par le deuxième chemin ;
**caractérisée en ce que**
la trémie est configurée en outre de sorte que, lorsque la première vanne se trouve dans sa position fermée, la première vanne et la paroi de soutien sont inclinées l'une vers l'autre, la paroi de soutien s'arrêtant juste avant la première vanne, en formant un écart (1140) et la première vanne s'étend au-delà du point où la première vanne et la paroi de soutien se croiseraient autrement, de sorte qu'une extrémité distale de la première vanne est décalée latéralement de l'extrémité inférieure de la paroi de soutien.

2. Trémie (1110) selon la revendication 1, le premier chemin comprenant une première ouverture dimensionnée de façon à permettre l'évacuation à la fois du produit et des fines, et le deuxième chemin comprenant une deuxième ouverture dimensionnée de façon à permettre l'évacuation des fines mais non pas du produit, la trémie étant configurée, de préférence, de façon à ce que la deuxième ouverture soit l'écart entre la première vanne, lorsqu'elle se trouve dans sa position fermée, et l'extrémité inférieure de la paroi de soutien.

3. Trémie (1110) selon une quelconque des revendications 1 à 2, configurée de sorte que :
lorsque la première vanne se trouve dans sa position ouverte, le premier chemin dirige le contenu de la trémie hors de celle-ci par gravité dans une première direction ; et
lorsque la première vanne se trouve dans sa position fermée, le deuxième chemin dirige les fines hors de la trémie par gravité dans une deuxième direction, inclinée relativement à la première direction ;
et, de préférence :
la paroi de soutien formant un angle aigu avec l'axe vertical, de sorte que, lorsque la première vanne se trouve dans sa position ouverte, le contenu de la trémie passe au-dessus de la paroi de soutien et hors de la trémie dans la première direction ; et/ou
la trémie étant configurée de sorte que, lorsque la première vanne se trouve dans sa position fermée, la première vanne forme un angle aigu avec l'axe vertical, de sorte que les fines passent au-dessus de la première vanne et hors de la trémie dans la deuxième direction.

4. Trémie (2100) pour le détournement d'un excès de fines hors d'un mélange de produit et de fines, la trémie (2100) comprenant une première vanne (2110), pouvant être déplacée entre des positions ouverte et fermée, et une paroi de soutien (2134), la première vanne étant configurée de sorte que :
lorsque la première vanne se trouve dans sa position ouverte, ceci forme un premier chemin pour la sortie, hors de la trémie, du contenu de la trémie comprenant un mélange de produit et de fines ; et
lorsque la première vanne se trouve dans sa position fermée, le premier chemin est fermé par la première vanne de façon à maintenir le produit dans la trémie, et un deuxième chemin, distinct du premier chemin, est destiné à la sortie de fines hors de la trémie ; et
la paroi de soutien comprend une deuxième vanne (2132) pouvant être déplacée entre des positions ouverte et fermée, de sorte que :
lorsque les première et deuxième vannes (2110, 2132) se trouvent dans leurs positions ouvertes respectives, le premier chemin s'étend entre les première et deuxième vannes ; et
lorsque les première et deuxième vannes se trouvent dans leurs positions fermées respectives, le premier chemin est bloqué et le deuxième chemin s'étend entre les première et deuxième vannes ;
un décalage latéral étant présent entre le point où le contenu de la trémie sort de celle-ci par le premier chemin et celui où les fines sortent de la trémie par le deuxième chemin ;
la trémie étant configurée en outre de sorte que lorsque les première et deuxième vannes se trouvent dans leurs positions fermées respectives, les première et deuxième vannes s'inclinent l'une vers l'autre, la deuxième vanne s'arrêtant juste avant la première vanne en formant un écart (2140), et la première vanne s'étendant au-delà du point où les vannes se croiseraient autrement, de sorte qu'une distance distale de la première vanne est décalée latéralement d'une distance distale de la deuxième vanne.

5. Trémie (2140) selon la revendication 4, le premier chemin comprenant une première ouverture dimensionnée de façon à permettre l'évacuation à la fois de produit et de fines, et le deuxième chemin comprenant une deuxième ouverture dimensionnée de façon à permettre l'évacuation de fines mais non pas de produit, la trémie étant, de préférence, configurée de façon à ce que la deuxième ouverture soit l'écart entre la première vanne, lorsqu'elle se trouve dans sa position fermée, et l'extrémité inférieure de la deuxième vanne.

6. Trémie (2140) selon une quelconque des revendications 4 à 5, configurée de sorte que :
lorsque la première vanne se trouve dans sa position ouverte, le premier chemin dirige le contenu de la trémie hors de celle-ci par gravité dans une première direction ; et
lorsque la première vanne se trouve dans sa position fermée, le deuxième chemin dirige les fines hors de la trémie par gravité dans une deuxième direction, inclinée relativement à la première direction ;
et, de préférence :
la paroi de soutien formant un angle aigu avec l'axe vertical, de sorte que, lorsque la première vanne se trouve dans sa position ouverte, le contenu de la trémie passe au-dessus de la paroi de soutien et hors de la trémie dans la première direction ; et/ou
la trémie étant configurée de sorte que, lorsque la première vanne se trouve dans sa position fermée, la première vanne forme un angle aigu avec l'axe vertical, de sorte que des fines passent au-dessus de la première vanne et hors de la trémie dans la deuxième direction.

7. Trémie (2140) selon une quelconque des revendications 4 à 6, configurée pour déplacer les première et deuxième vannes entre leurs positions fermée et ouverte respectives de façon substantiellement simultanée.

8. Trémie (2140) selon une quelconque des revendications 4 à 7, la première vanne (2110) étant au moins 1,2 fois plus longue que la deuxième vanne (2132), et de préférence au moins 1,5 fois plus longue.

9. Appareil (1000) assurant la séparation d'excès de fines d'un mélange de produit et de fines, l'appareil comprenant :
une trémie (1100, 2100) selon une quelconque des revendications précédentes ;
une première goulotte (1200, 2200) positionnée de façon à recevoir le contenu de la trémie sortant de la trémie par le premier chemin lorsque la première vanne se trouve dans sa position ouverte ; et
une deuxième goulotte (1400, 2400) positionnée de façon à recevoir des fines sortant de la trémie par le deuxième chemin lorsque la première vanne se trouve dans sa position fermée.

10. Appareil (1000) selon la revendication 9, la première goulotte étant formée comme un filtre configuré pour permettre à des fines entrant dans la première goulotte de sortir, à travers la première goulotte, dans la deuxième goulotte, mais sans permettre à des produits entrant dans la première goulotte de sortir, à travers la première goulotte, dans la deuxième goulotte, la deuxième goulotte étant, de préférence, agencée de façon concentrique autour de la première goulotte.

11. Dispositif d'emballage comprenant :
l'appareil (1000) selon une quelconque des revendications 9 à 10 ;
un appareil de remplissage pour l'emballage situé à une extrémité inférieure de la première goulotte, et agencé de sorte que le contenu de la trémie reçu par la première goulotte passe, par gravité, aisément sur la surface réceptrice de la goulotte et dans un dispositif d'emballage ; et
un appareil de scellement configuré pour sceller l'article d'emballage lorsque le contenu de la trémie, reçu par la première goulotte, est descendu sur le surface réceptrice et dans le dispositif d'emballage.

12. Procédé de détournement d'un excès de fines hors d'un mélange de produit et de fines, le procédé comprenant :
(a) l'introduction (210) d'un mélange de produit et de fines dans une trémie (1100) selon une quelconque des revendications 1 à 3, la première vanne (1110) se trouvant dans la position fermée, en bloquant un premier chemin hors de la trémie, et en maintenant ainsi le produit dans la trémie, mais en permettant aux fines de sortir de la trémie par un deuxième chemin ;
(b) le déplacement (220), par la suite, de la première vanne (1110) dans sa position ouverte de sorte que le contenu de la trémie sorte de la trémie par le premier chemin ; et
(c) le déplacement ultérieur (230) de la première vanne dans la position fermée de sorte que le premier chemin soit bloqué et que l'excès de fines restant dans la trémie sorte de celle-ci par le deuxième chemin.

13. Procédé selon la revendication 12, comprenant en outre ce qui suit :
répéter toutes les étapes a) à c) l'une après l'autre, la deuxième itération de l'étape b) survenant au moins 400 ms après la première itération de l'étape c) ; et/ou
suivant l'étape a), (i) obtenir une série chronologique d'une pluralité de mesures du poids du contenu de la trémie, et (ii) effectuer une détermination, sur la base de la pluralité de mesures du poids, de la stabilisation du poids de la trémie ; l'étape b) n'étant effectuée que lorsque ladite détermination a été effectuée ; et/ou
conjointement avec l'étape b), permettre le passage régulier, par gravité, du contenu de la trémie sortant de celle-ci par le premier chemin, de la trémie dans un dispositif d'emballage, puis le scellement du dispositif.

14. Procédé selon une quelconque des revendications 12 à 13, comprenant en outre le filtrage de fines hors du contenu de la trémie sortant de la trémie par le premier chemin.

15. Procédé de détournement d'un excès de fines hors d'un mélange de produit et de fines, le procédé comprenant :
a) l'introduction d'un mélange de produit et de fines dans une trémie (2100) selon une quelconque des revendications 4 à 8, les première et deuxième vannes (2100, 2132) se trouvant dans leurs positions fermées respectives en bloquant un premier chemin hors de la trémie, et en maintenant ainsi le produit dans la trémie, mais en permettant la sortie des fines hors de la trémie par un deuxième chemin ;
b) le déplacement ensuite des première et deuxième vannes (2100, 2132) dans leurs positions ouvertes respectives de sorte que le contenu de la trémie sorte de la trémie par le premier chemin ; et
c) le déplacement ensuite des première et deuxième vannes (2100, 2132) dans leurs positions fermées respectives de sorte que le premier chemin soit bloqué et que l'excès de fines restant dans la trémie sorte de la trémie par le deuxième chemin.

16. Procédé selon la revendication 15, l'étape b) comprenant le déplacement des première et deuxième vannes dans leurs positions ouvertes respectives de façon substantiellement simultanée.

17. Procédé selon une quelconque des revendications 15 à 16, comprenant en outre ce qui suit :
répéter toutes les étapes a) à c) l'une après l'autre, la deuxième itération de l'étape b) survenant au moins 400 ms après la première itération de l'étape c) ; et/ou
suivant l'étape a), (i) obtenir une série chronologique d'une pluralité de mesures du poids du contenu de la trémie, et (ii) effectuer une détermination, sur la base de la pluralité de mesures du poids, de la stabilisation du poids de la trémie ; l'étape b) n'étant effectuée que lorsque ladite détermination a été effectuée ; et/ou
conjointement avec l'étape b), permettre le passage régulier, par gravité, du contenu de la trémie sortant de celle-ci par le premier chemin dans un dispositif d'emballage, suivi du scellement du dispositif d'emballage.

18. Procédé selon une quelconque des revendications 15 à 17, comprenant en outre le filtrage de fines hors du contenu de la trémie sortant de la trémie par le premier chemin.
